# EUROPÄISCHE PATENTANMELDUNG

(11) **EP 4 825 151 A1**
(43) Veröffentlichungstag der Anmeldung: **21.10.2026**
(21) Anmeldenummer: 25171432.5
(22) Anmeldetag: 17.04.2025
(51) Int. Cl.: A01B 63/111, A01B 79/00, A01D 41/14, G01S 15/08

(54) **MESSSYSTEM SOWIE VERFAHREN ZUR DURCHFÜHRUNG EINER MESSUNG**

(71) Anmelder: MOBA Mobile Automation AG, 65555 Limburg (DE)
(72) Erfinder: LORENZ, Mathias, 65555 Limburg (DE); RUPPEL, Jörg, 65555 Limburg (DE); URBAN, Yannic, 65555 Limburg (DE)
(74) Vertreter: Pfitzner, Hannes

(57) **Zusammenfassung**

Messsystem für eine Landmaschine oder für ein landwirtschaftliches Anbaugerät einer Landmaschine, mit folgenden Merkmalen: zumindest einem Abstandssensor, der ausgebildet ist, einen Abstand zu einem Untergrund berührungslos zu erfassen und in Abhängigkeit von dem Abstand ein Abstandssignal, anzeigend einen Abstandswert auszugeben; sowie eine Auswerteeinheit, die ausgebildet ist, den Abstandswert auszuwerten, um einen validierten Abstandswert zu bestimmen, wobei die Auswerteeinheit nur diejenigen Abstandswerte bei der Bestimmung des validierten Abstandswerts berücksichtigt, die innerhalb eines vorbestimmten Fensters liegen.

## Beschreibung

Ausführungsbeispiele der vorliegenden Erfindung beziehen sich auf ein Messsystem sowie eine Landmaschine, insbesondere eine Landmaschine mit einem landwirtschaftlichen Anbaugerät und Messsystem. Weitere Ausführungsbeispiele beziehen sich auf ein Verfahren zur Durchführung einer Messung und auf ein entsprechendes Computerprogramm.

Im Allgemeinen liegt die Erfindung auf dem Gebiet von Landmaschinen, insbesondere von landwirtschaftlichen Anbaugeräten, wie z. B. einem Grubber, einer Egge, einem Pflug, einer Bodenfräse, einer Sä- oder Drillmaschine, einem Schneid- oder Mähwerk oder dergleichen. Ein bevorzugtes Ausführungsbeispiel der Erfindung bezieht sich auf ein Abstandsmesssystem für solch ein landwirtschaftliches Anbaugerät.

Landwirtschaftliche Anbaugeräte wie Grubber, Egge, Pflug oder Bodenfräsen werden hauptsächlich zur Bodenbearbeitung oder Bodenkultivierung eingesetzt, beispielsweise zum Auflockern oder Umbruch von Böden, zur Einarbeitung von Ernteresten oder Dünger in den Boden sowie zur Herstellung eines saatbettfertigen Ackerbodens. Sä- oder Drillmaschinen dienen der Aussaat von Samen, wobei die Samenkörner in von Säscharen gezogene Rillen fallen und anschließend mit einer Schicht Boden bedeckt werden. Mit Säkombinationen, die aus einem Bodenbearbeitungsgerät und einer Sä- oder Drillmaschine bestehen, können Saatbettvorbereitung und Aussaat in einem Arbeitsgang durchgeführt werden. Anbaugeräte wie ein Schneid- oder Mähwerk werden zum Mähen bzw. Ernten von beispielsweise Gras, Getreide oder anderen Früchten benötigt, wobei Wurzeln oder Stoppeln als Ernterückstand auf der Fläche verbleiben.

Die landwirtschaftlichen Anbaugeräte weisen in der Regel einen an ein Fahrzeug ankoppelbaren Rahmen auf, über welchen das Anbaugerät angehoben und abgesenkt sowie auf eine spezifische Arbeitshöhe bzw. Arbeitstiefe eingestellt und während den Arbeiten in einer konstanten Arbeitshöhe bzw. Arbeitstiefe gehalten werden kann. Bei dem Fahrzeug kann es sich beispielsweise um eine selbstfahrende landwirtschaftliche Arbeitsmaschine wie ein Traktor oder eine Erntemaschine zum Mähen oder Ausdreschen von Getreide- und Samenkörnern (Mähdrescher, Feldhäcksler oder ähnlich) handeln.

Das Halten oder Führen des Anbaugeräts in einer konstanten Arbeitshöhe bzw. Arbeitstiefe ist in der modernen Landwirtschaft beispielsweise bei einer Stoppelbearbeitung und einer Saatbettvorbereitung mithilfe eines Grubbers erforderlich, die in mehreren Arbeitsgängen mit unterschiedlichen Arbeitstiefen erfolgen kann. So wird in einem ersten Arbeitsgang bei flacher Bearbeitung Ausfallgetreide und organische Masse oberflächennah in den Boden eingearbeitet. Das nunmehr keimende Ausfallgetreide wird zu einem späteren Zeitpunkt wieder mit demselben Grubber bearbeitet, wobei die Arbeitstiefe hierbei ca. 10 bis 15 cm beträgt. Je nach Saatgut und Saatverfahren kann mit dem Grubber in einem weiteren Arbeitsgang beispielsweise auch bis 30 cm tief gearbeitet werden. Durch diese tiefe Bearbeitung wird beispielsweise die gesamte Ackerkrume gelockert.

Bei Sä- oder Drillmaschinen ist das Einhalten einer gleichmäßigen Sätiefe unter nahezu allen Einsatzbedingungen und Arbeitsgeschwindigkeiten notwendig, um beispielsweise je nach Bodenart und Bodenbedingungen sowie Saatgut und Samenart eine erfolgreiche Samenkeimung sicherzustellen.

Bei einem selbstfahrenden Mähdrescher oder Feldhäcksler ist es während des Erntevorgangs erforderlich, eine geeignete Anpassung der Höhe und/oder der Querneigung des Schneid- oder Mähwerks vorzunehmen, beispielsweise bei Veränderungen im Bodenprofil oder bei vorhandenem Feldbewuchs wie Gras oder Unkraut oder bei einem auf dem Boden liegenden Erntegut.

Bereits im Stand der Technik gibt es einige Steuersysteme für landwirtschaftliche Anbaugeräte. Die EP 3 884 747 A2 beschreibt ein Steuersystem für ein landwirtschaftliches Anbaugerät. Die Höhensteuerung hält das Anbaugerät auf einer entsprechenden Höhe bzw. die Arbeitswerkzeuge des Anbaugeräts in einer entsprechenden Bodentiefe.

Weiterhin beschreibt die DE 102018 124 705 A1 ein Nachrüstkit zum Anbau an ein landwirtschaftliches Gerät, das an einen Traktor anbaubar und mit diesem betreibbar ist. Bei dem landwirtschaftlichen Gerät kann es sich um einen Grubber, eine Kurzscheibenegge, eine Sämaschine oder eine Kreiselegge handeln. Das Nachrüstkit weist einen Sensor zur Erfassung der Ist-Arbeitstiefe des landwirtschaftlichen Geräts auf. Aus dem Vergleich der Ist-Arbeitstiefe mit einem vorher geplanten Sollwert ergeben sich Stellgrößen für die Höhenverstellung des Geräts und ermöglichen eine automatische Arbeitstiefenführung.

Ferner beschreibt die DE 102 14 648 A1 Verfahren und Messeinrichtungen zur Ermittlung des Abstandes zwischen einer landwirtschaftlichen Maschine und dem Boden, wobei die landwirtschaftliche Maschine aus einer selbstfahrenden Arbeitsmaschine und einem Vorsatzgerät besteht und zumindest ein Sensor den Abstand zwischen dem Vorsatzgerät und der Oberfläche des Feldes berührungslos ermittelt.

Die DE 44 06 892 A1 beschreibt eine Vorrichtung zur Regelung des Bodenabstandes einer Bearbeitungseinheit einer landwirtschaftlichen Maschine.

Bekannt ist noch die EP 0 177 024 A2, welche ein Verfahren zur Bestimmung der Arbeitstiefe von Säscharen von Drillmaschinen beschreibt. Als weiterer Stand der Technik wäre auch die DE 691 32 170 T2 zu nennen.

Weiterhin ist die DE 10 2005 051 407 B4 bekannt, welche eine Vorrichtung zur Bodenabstandsmessung an einer Landmaschine beschreibt, wobei der Bodenabstandsmesser ein periodisch angeregter Ultraschallsensor ist.

Der Stand der Technik hat den Nachteil, dass die Genauigkeit bei der Abstandsmessung aufgrund der Bodenbeschaffenheit häufig nicht ausreicht und/oder die Aktualisierung der Höhenwerte nicht hoch genug ist, um eine dynamische Regelung zu gewährleisten. Auch sind bekannte, auf dem Markt verfügbare Systeme durch den Einfluss von Stoppeln, Ernterückständen usw. teils sehr störungsanfällig. Deshalb besteht der Bedarf nach einem verbesserten Ansatz.

Ausführungsbeispiele der vorliegenden Erfindung schaffen ein Messsystem für eine Landmaschine oder ein landwirtschaftliches Anbaugerät einer Landmaschine. Das Messsystem umfasst zumindest einen Abstandssensor sowie eine Auswerteeinheit. Der Abstandssensor ist ausgebildet, einen Abstand zu einem Untergrund berührungslos, z.B. per Ultraschall, zu erfassen und in Abhängigkeit von dem (erfassten) Abstand ein oder mehrere Abstandssignale, jeweils anzeigend einen Abstandswert auszugeben. Die Auswerteeinheit ist ausgebildet, den Abstandswert oder die Abstandswerte auszuwerten, um einen validierten Abstandswert zu bestimmen. Die Auswerteeinheit berücksichtigt jedoch nur denjenigen Abstandswert oder diejenigen Abstandswerte bei der Bestimmung des validierten Abstandswerts, die innerhalb eines vorbestimmten Fensters liegen.

Das Fenster symbolisiert z.B. den Erwartungshorizont, in welchen der Abstand schwankt, der auch als Erwartungsbereich bezeichnet werden kann. Entsprechend Ausführungsbeispielen kann das vorbestimmte Fenster durch einen Offset oder einen Offset mit einem Erwartungswert für den Abstandswert definiert sein.

Ausführungsbeispielen der vorliegenden Erfindung liegt also die Erkenntnis zugrunde, dass die unterschiedlichen Bedingungen im Sinne von Veränderungen im Bodenprofil, unterschiedlichen Bodenbeschaffenheiten, wie z. B. trockener oder nasser Boden, heterogener Vegetation bzw. allgemeiner Vegetationsdichte, der Feldbewuchs usw., einen erheblichen Einfluss auf die ermittelten Abstandswerte haben. In der Praxis schwanken deshalb die Bearbeitungshöhe bzw. -tiefe oftmals aufgrund der genannten Bedingungen, was beispielsweise zu einer inhomogenen Bearbeitungsstruktur des Bodens oder aber zu einem entsprechenden Ernteverlust führt. Dadurch, dass nun ein Fenster mit einem gewissen Erwartungswert definiert wird, in welchem die Werte als validiert gelten, können so signifikant abweichende Werte, z. B. aufgrund von Messungen gegenüber der Vegetation statt dem Untergrund, ausgeblendet werden. Somit ist es also vorteilhafterweise möglich, Abstandsmessungen oder Höhenmessungen bei einem Feld oder Stoppelfeld, auch mit dichtem Bodenbewuchs bzw. starkem Unkrautbesatz, sicher und genau zu erfassen. Im Gegensatz zum Stand der Technik muss auch nicht durch starke Glättung bzw. Mittelwertbildung ein Mittelwert über eine lange Zeitdauer bzw. mehrere Positionen genommen werden, was dann auch verhindert, dass es nicht zu einer Verminderung des Detailgenauigkeitsgrades kommt.

Entsprechend Ausführungsbeispielen ist es möglich, z. B. unter Verwendung einer Steuerung ausgehend von den validierten Abstandswerten, eine Höhe und/oder eine Tiefe eines landwirtschaftlichen Anbaugeräts der Landmaschine zu steuern und/oder konstant zu halten. Somit wird also die exakte Höhe bzw. Tiefe (beispielsweise 5, 10 oder 30 cm) des landwirtschaftlichen Anbaugeräts während der jeweiligen Arbeit (Grubbern, Pflügen, Säen, Ernten usw.) geführt oder gehalten, ohne dass der Fahrer des Zugfahrzeugs oder der Erntemaschine eingreifen muss. Aufgrund der oben erläuterten Beibehaltung des hohen Detailgrades ist eine gute Reaktionsgeschwindigkeit bei der Bodenabstandsmessung möglich. Somit ist also zusammenfassend festzustellen, dass durch das beschriebene Messsystem eine hohe Präzision der Messgenauigkeit bei hinreichend kurzer Reaktionszeit unter den genannten Bedingungen erreicht wird.

In anderen Worten schafft ein Ausführungsbeispiel ein Abstandsmesssystem für ein landwirtschaftliches Anbaugerät, mit:
- einem berührungslos arbeitenden Abstandssensor, insbesondere einem Ultraschall-Abstandssensor, welcher Messsignale aussendet und die vom Boden bzw. die vom Bewuchs, Stoppeln usw. reflektierten (Echo)-Signale empfängt, und
- einer Auswerteeinheit, die die empfangenen (Echo)-Signale des Abstandssensors auswertet, ein Bodenabstandsmesssignal berechnet und dieses Signal über eine Schnittstelle ausgibt.

Entsprechend Ausführungsbeispielen ist Kern dieses Messsystems eine auf das oben beschriebene Problem angepasste Signalauswertung, wodurch in vorteilhafter Weise ein zuverlässiges und mit hoher Messgenauigkeit ermitteltes Bodenabstandsmesssignal einer nachfolgenden Höhen- bzw. Tiefenregelung bereitgestellt wird, sodass während der Arbeiten das Anbaugerät in einer vorgegebenen Sollhöhe/Solltiefe gehalten bzw. geführt wird, insbesondere unter den genannten Bedingungen.

Entsprechend einer ersten Variante der Signalauswertung wird gemäß Ausführungsbeispielen aus allen empfangenen (Echo)-Signalen das richtige Signal herausgesucht, nämlich nur dasjenige Signal, welches in einem vordefinierten Zielfenster "am weitesten oben" liegt, d. h. den höchsten bzw. größten Abstandswert aufweist. Denn dann ist mit hoher Wahrscheinlichkeit davon auszugehen, dass dieses (Echo)-Signal vom Boden reflektiert wurde und nicht von der Vegetation (Halm, Pflanze, Unkraut etc.).

Entsprechend einer zweiten Variante der Signalauswertung wird gemäß Ausführungsbeispielen aus allen empfangenen (Echo)-Signalen das Signal herausgesucht, welches dem zuletzt ermittelten Messwert "am nächsten kommt", d. h. denjenigen Abstandswert aufweist, der sehr nahe bzw. sehr dicht am zuvor ermittelten Abstandswert liegt oder gleich diesem ist. In anderen Worten ausgedrückt heißt es, dass entsprechend Ausführungsbeispielen die Auswerteeinheit, die mehrere Abstandswerte erhält (z. B. aus (zeitlich) vorherigen Messungen oder aus derselben Messung), Abstandswerte außerhalb des vorbestimmten Fensters verwirft und/oder (stattdessen) die Abstandswerte als validierte Abstandswerte verwendet, die gegenüber einem vorher ermittelten Abstandswert eine minimale Differenz aufweisen. Somit kann vorteilhafterweise sichergestellt werden, dass ein kontinuierliches Signal ohne Lücken im Signalverlauf erhalten ist.

Wie oben bereits erläutert, kann also entsprechend Ausführungsbeispielen das vorbestimmte Fenster durch eine Art Offset definiert sein. Der Offset kann einen positiven oder negativen Offsetanteil aufweisen. Entsprechend Ausführungsbeispielen kann der Offset auch unsymmetrisch sein, d. h. also beispielsweise zwischen -3 und +5 cm betragen oder zwischen -4 und +10 cm. Die Größe des Erwartungsbereichs kann entsprechend Ausführungsbeispielen zwischen 1 und 10 % oder zwischen 1 und 20 % oder zwischen 1 und 30 % oder zwischen 5 und 30 % der Anbauhöhe des Abstandssensors entsprechen. Der Erwartungsbereich unterscheidet sich entsprechend Ausführungsbeispielen von einem Erwartungswert um die entsprechende Schwankungsbreite bzw. den entsprechenden Offset, die/der wiederum abhängig ist von dem aktuell zu bearbeiteten Bodenart des Untergrunds sowie der Vegetation des Untergrunds. Deshalb kann entsprechend Ausführungsbeispielen das vorbestimmte Fenster bzw. der Offset abhängig von einer Voreinstellung und/oder abhängig von einer Bodenart des Untergrunds und/oder abhängig von einer Vegetation des Untergrunds definiert sein. Somit ist es also vorteilhafterweise möglich, das Messsystem auf unterschiedlichen Untergründen anzuwenden bzw. allgemein gesprochen an die aktuellen Umgebungsbedingungen anzupassen.

Der Erwartungswert, um den der Offset schwankt, kann gemäß Ausführungsbeispielen durch einen initialen Referenzwert und/oder eine Referenzmessung festgelegt sein. Befindet sich das landwirtschaftliche Anbaugerät nicht im Eingriff mit dem zu bearbeitenden Boden, so entspricht der Erwartungswert initial der Anbauhöhe. Für den Fall, dass der Erwartungswert während des Betriebs bestimmt wird, ist der Erwartungswert durch den initialen Referenzwert und/oder die Anbauhöhe und/oder die initiale Referenzmessung abzüglich einer Eingriffstiefe des landwirtschaftlichen Anbaugeräts oder einer bestimmten/eingestellten Eingriffstiefe für das landwirtschaftliche Anbaugerät festgelegt. Somit ist es also vorteilhafterweise möglich, dass eine dynamische Anpassung des Erwartungswerts erfolgt.

Entsprechend Ausführungsbeispielen sind die Anbauhöhe des Sensors am Anbaugerät und der gemessene Abstand zum Boden während einer Bodenbearbeitung bei einem Anbaugerät wie Grubber, Pflug, Sä- und Drillmaschine unterschiedlich, und zwar ab dem Zeitpunkt, wenn das Bodenbearbeitungsgerät in den Boden eingelassen wird bzw. mit dem zu bearbeitenden Boden in Eingriff ist. Von der initialen Anbauhöhe des Sensors muss daher die vorgegebene Eingriffstiefe abgezogen werden, um den tatsächlich zu regelnden Abstandswert (Bodenabstandswert) zu erhalten. Eine Regelung der Eingriffstiefe könnte dabei gestartet oder getriggert werden, wenn beispielsweise das erste (Echo)-Signal einen Abstandswert repräsentiert, der im Zielfenster liegt. Optional könnte auch ein Höhensignal des Dreipunktgestänges, an welcher das Anbaugerät an den Traktor montiert ist, genutzt werden. Dieses Höhensignal (Position des Dreipunktgestänges) wird ebenfalls über eine weiter unten genannte Signalsteckdose oder über eine weiter unten genannte Schnittstelle wie bspw. ISOBUS bereitgestellt. Die Regelung der Eingriffstiefe würde in diesem Fall gestartet werden, wenn das Dreipunktgestänge auf bzw. unter einen vordefinierten Wert abgesenkt wurde.

An dieser Stelle sei angemerkt, dass beispielsweise die Anbauhöhe des Sensors dem Abstand zwischen dem Sensor und dem Boden entspricht, auf dem das Anbaugerät steht, wenn es nicht in Eingriff mit dem zu bearbeiteten Boden ist (beispielsweise die Spitze einer Grubberzinke).

Ausgehend von diesen Merkmalen ergibt sich also entsprechend Ausführungsbeispielen folgendes Messverfahren:
1. Zielfenster in der Auswerteeinheit definieren;
2. Sensor sendet ein Ultraschall-Messsignal in Richtung Boden aus und führt eine Referenzmessung durch;
3. Sensor empfängt vom Boden und/oder Vegetation reflektierte (Echo)-Signale;
4. Aus allen empfangenen (Echo)-Signalen sowie der Referenzmessung werden nun entsprechende Abstandsmesswerte errechnet;
5. Für die Berechnung eines Bodenabstandsmesssignals werden nur diejenigen Abstandsmesswerte berücksichtigt, die im Zielfenster liegen;
6. Dasjenige Signal, welches in dem Zielfenster "am weitesten oben" liegt (d. h. den höchsten bzw. größten Abstandswert aufweist) oder welches dem zuletzt ermittelten Messwert "am nächsten kommt" (d. h. denjenigen Abstandswert aufweist, der sehr nahe bzw. sehr dicht am zuvor ermittelten Abstandswert liegt oder gleich diesem ist), wird als gültiges Bodenabstandsmesssignal angesehen;
7. Ausgabe des Bodenabstandsmesssignals über eine Schnittstelle;
8. Nächste Messung startet bei Schritt 2.

Zu Schritt 1, Zielfenster definieren: Aus der Anbauhöhe des Sensors, d. h. dem Abstand zwischen Sensor und Boden, und einem vordefinierten Offsetbereich ergibt sich das Zielfenster. Der Offsetbereich kann ein Bereich von +/- 5 cm bis +/- 10 cm sein, optimal wären +/- 7 cm. Somit würde das Zielfenster bei einer Sensoranbauhöhe von beispielsweise 80 cm und einem vordefinierten Offsetbereich von +/- 7 cm in einem Bereich von 73 cm bis 87 cm liegen. Denkbar ist neben einem symmetrischen Offsetbereich auch ein unsymmetrischer Bereich, bspw. + 7 cm und - 5 cm.

Zu Schritt 3, reflektierte (Echo)-Signale: Praxistests haben gezeigt, dass je nach Bodenbeschaffenheit und Vegetation bzw. Vegetationsdichte zwischen einem und bis zu vier (Echo)-Signale empfangen werden. Ist beispielsweise wenig bis gar keine Vegetation vorhanden, so werden nur ein oder zwei (Echo)-Signale vom zu messenden Boden oder der Vegetation reflektiert. Mit steigender Vegetationsdichte nimmt in der Regel auch die Anzahl der (Echo)-Signale zu.

Zu Schritt 5: Liegt keiner der gemessenen (berechneten) Abstandsmesswerte im Zielfenster, so wird die Messung verworfen und eine erneute Messung (Schritt 2) gestartet. Dieser Fall kann eintreten, wenn beispielsweise der Bewuchs/die Vegetation so dicht ist, dass kein Boden sichtbar ist (beispielsweise bei Gras- oder Grünland, bei welchem die Halme komplett den Boden bedecken). Fehlende Messwerte bzw. verworfene Messwerte können durch interpolierte Messwerte ersetzt werden, sofern ein Weg- oder Zeitlimit von aufeinanderfolgenden Messwerten nicht überschritten wurde. Das Weg- oder Zeitlimit kann bspw. ein zurückgelegter Weg oder eine bestimmte Zeitdauer sein, bspw. 5 Meter oder 5 Sekunden. Diese Werte sind nur beispielhaft, d. h. die Werte können auch größer oder kleiner sein.

Entsprechend Ausführungsbeispielen ist die Auswerteeinheit dazu ausgebildet, Abstandswerte außerhalb des vorbestimmten Fensters zu verwerfen. Das hat vorteilhafterweise den Effekt, dass diese Abstandswerte, die beispielsweise gegenüber einem Bewuchs gemessen werden, nicht mit in die Berechnung mit einfließen, unabhängig davon, ob eine Mittelwertbildung erfolgt oder nicht. Entsprechend weiteren Ausführungsbeispielen ist die Auswerteeinheit ausgebildet, den validierten Abstandswert ausgehend von einem vorher bestimmten validierten Abstandswert (z.B. zugehörig zu einer vorherigen Position) zu bestimmen, wenn alle Abstandswerte außerhalb des vorbestimmten Fensters liegen. Wenn also ausgehend von der aktuellen Messung kein validierter Abstandswert bestimmbar ist, kann so vorteilhafterweise ein vorherbestimmter validierter Abstandswert fortgeschrieben werden.

Hintergrund für dieses Ausführungsbeispiel liegt darin, dass entsprechend weiteren Ausführungsbeispielen eine kontinuierliche Messung des Abstandswerts an mehreren aufeinanderfolgenden Positionen erfolgt. Die Auswerteeinheit ist dann ausgebildet, über mehrere Abstandssignale und Abstandswerte zugeordnet zu unterschiedlichen Positionen und/oder unterschiedlichen Zeitpunkten die Bestimmung durchzuführen. Entsprechend Ausführungsbeispielen kann eine Mittelwertbildung verwendet werden oder ein gleitender Mittelwert berechnet werden. Insofern werden durch solch eine Mittelwertfilterung kleinere Ausreißer weniger berücksichtigt als die Großzahl der gemessenen Abstandswerte. Entsprechend weiteren Ausführungsbeispielen wäre es vorteilhafterweise auch denkbar, dass über mehrere Abstandswerte innerhalb des Fensters zugeordnet zu unterschiedlichen Positionen und/oder unterschiedlichen Zeitpunkten die Mittelwertfilterung durchgeführt wird bzw. ein gleitender Mittelwert berechnet wird. Das hat den Vorteil, dass so zwar variierende Signale innerhalb des Fensters bei der Mittelwertbildung berücksichtigt bleiben, während Messungen gegenüber der Vegetation oder ähnlichem nicht mit in die Messung und Mittelwertbildung einfließen. Entsprechend Ausführungsbeispielen sind weitere Mittel zur Signalbearbeitung in der Auswertevorrichtung vorgesehen. Diese können beispielsweise sein:
- Mittelwertfilter wie gleitender Mittelwert oder gleitender Durchschnitt (movingaverage-filter). Bei diesem Filter wird ein Fenster mit fester Breite über die Messwertdaten, die im Zielfenster liegen, verschoben und aus den innenliegenden Werten ein neuer Datenpunkt errechnet. Ein Mittelwert kann dabei auch über die Zeit oder den zurückgelegten Weg erfolgen, wobei der zurückgelegte Weg entweder über eine satellitengestützte Positionierung (GNSS/GPS) - einige GPS-Empfänger geben ein Geschwindigkeitssignal aus - oder über eine sogenannte Signalsteckdose am Traktor ermittelt bzw. errechnet werden kann. Auch kann eine Weginformation über eine weiter unten beschriebene Schnittstelle wie bspw. ISOBUS bereitgestellt werden. Moderne Traktoren verfügen über eine Signalsteckdose, welche Impulse ausgibt, aus denen dann die Geschwindigkeit errechnet werden kann. Über diese Geschwindigkeitsinformation kann der zurückgelegte Weg ermittelt werden. Neben dem Mitteln von Messwertdaten kann ein solcher Signalfilter auch Messwertausreißer herausrechnen. Ebenso können Stützwerte ermittelt und eingesetzt werden, wenn Messwerte fehlen.
- Auswerten der Amplituden der (Echo)-Signale.

Der Vollständigkeit halber sei darauf hingewiesen, dass typischerweise mehrere Messungen an mehreren, in Fahrtrichtung aufeinanderfolgenden Positionen oder entsprechenden Zeitpunkten durchgeführt werden, was Basis für die Mittelwertbildung oder die kontinuierliche Bestimmung des Abstandes darstellt.

Entsprechend Ausführungsbeispielen handelt es sich bei dem Abstandssensor um einen Ultraschallsensor. Der Abstandssensor ist entsprechend Ausführungsbeispielen ausgebildet, Echo-Signale, welche durch ein ausgesendetes Messsignal von dem Untergrund und/oder einer Vegetation des Untergrunds reflektiert werden, zu empfangen. Das heißt also, dass entsprechend Ausführungsbeispielen der berührungslos arbeitende Abstandssensor vorzugsweise ein als Sende-Empfangs-Element dienenden Ultraschallsensor und eine mit dem Sende-Empfangs-Element in Verbindung stehende Auswerteeinheit zum Bestimmen von Abstandswerten des Sensors zu einem oder mehreren Objekten umfasst, wie beispielsweise Boden und/oder Vegetation. Das Sende-Empfangs-Element wechselt zyklisch von einem Sende- in einen Empfangsmodus, d. h. der Ultraschallsensor wird von der Auswerteeinheit zur Abstandsmessung abwechselnd mit einem Sendesignal beaufschlagt bzw. empfängt ein oder mehrere von den Objekten reflektierte Signale (sogenannte (Echo)-Signale). Die Auswerteeinheit ermittelt Abstandswerte zwischen dem Sensor und den Objekten auf der Grundlage von Objektecho-Laufzeiten des Ultraschalls vom Sensor zu den Objekten und von den Objekten zurück zum Sensor. Derartige Abstandssensoren sind aus dem Stand der Technik hinreichend bekannt.

Entsprechend Ausführungsbeispielen ist der Abstandssensor ausgebildet, eine Referenzmessung zur Kompensation von Temperatureinflüssen, Luftdruckeinflüssen, Luftfeuchtigkeitseinflüssen und/oder allgemein zur Kalibrierung durchzuführen. Hintergrund ist:
Um Laufzeitschwankungen der Ultraschallsignale aufgrund von sich ändernden Umgebungsbedingungen wie beispielsweise Temperatur, Luftdruck, Luftfeuchtigkeit und ähnlichem entsprechend Ausführungsbeispielen zu kompensieren, ist es aus dem Stand der Technik weiterhin bekannt, dass der Abstandssensor ein weiteres Ultraschall Sende-Empfangs-Element (Referenzsensor) aufweist, welches ebenfalls mit der Auswerteeinheit in Verbindung steht und einen definierten und sich nicht verändernden Abstand zu einer festen Referenz misst. Eine solche Referenz kann beispielsweise eine am Abstandssensor angeordnete feststehende Platte oder ein Referenzbügel sein, gegen welche der Referenzsensor misst. Mithilfe dieser Referenzmessung kann der Einfluss der Umgebungsbedingungen auf die Entfernungsmessung zum Objekt abgeleitet und kompensiert werden. Das heißt, die Auswerteeinheit berechnet aus den Objektecho-Laufzeitmessungen zwischen dem Sensor und den Objekten sowie aus der Laufzeitmessung zwischen dem Referenzsensor und der Referenz ein bzw. mehrere entsprechend kompensierte Abstandsmesssignale. Beispiele für solche Abstandssensoren mit einer derartigen Referenzmessung sind der Sonic-Ski-Sensor oder der CSMT- bzw. CSMS-Sensor der Anmelderin.

Die Anbauhöhe des Sensors sowie die benötigte Eingriffstiefe kann der Fahrer bzw. Bediener über eine Anzeige- und Bedieneinheit, die über die Schnittstelle (sofern diese als digitale Kommunikationsschnittstelle entsprechend einem Ausführungsbeispiel ausgeführt ist, beispielsweise ISOBUS) mit dem Sensor verbunden ist, einstellen oder verändern. Denkbar wäre in diesem Zusammenhang eine sogenannte Teach-In-Funktionalität, d. h. Anbauhöhe und Eingriffstiefe können per Tastendruck automatisch ermittelt und abgespeichert werden. Auch weitere Parameter das Abstandsmesssystem betreffend, wie beispielsweise eine Abtastrate (Messperiode) oder Sende- oder Empfangsparameter des Sensors, bspw. eine Sendeleistung oder eine Empfängerempfindlichkeit des Sensors, oder die Art der Vegetation auf dem zu bearbeitenden Boden (bspw. Stoppeln von Raps, Mais, Weizen, Sonnenblumen etc. oder Grünland), können über diese Anzeige- und Bedieneinheit eingestellt oder verändert werden. Die Abtastrate (Messperiode) des Sensors liegt üblicherweise bei ca. 20 ms, wobei der Wert für die Abtastrate aber auch größer oder kleiner sein kann.

Entsprechend Ausführungsbeispielen wäre es denkbar, dass die Auswerteeinheit ausgebildet ist, eine Abtastrate und/oder eine Messperiode für den Abstandswert in Abhängigkeit von einer Art des Untergrunds und/oder einer Vegetation des Untergrunds und/oder einer Voreinstellung und/oder einer Fahrgeschwindigkeit der Maschine zu variieren. Die Auswerteeinheit ist entsprechend weiteren Ausführungsbeispielen ausgebildet, eine Filtereinstellung in Abhängigkeit einer Art des Untergrunds und/oder einer Vegetation des Untergrunds und/oder einer Voreinstellung und/oder einer Fahrgeschwindigkeit der Maschine anzupassen. Die Auswerteeinheit ist entsprechend weiteren Ausführungsbeispielen ausgebildet, Sende- oder Empfangsparameter des Abstandssensors, d. h. eine Sendeleistung oder eine Empfängerempfindlichkeit des Ultraschallsensors für die Messung des Abstandswerts, in Abhängigkeit von einer Art des Untergrunds und/oder einer Vegetation des Untergrunds und/oder einer Voreinstellung anzupassen. Entsprechend weiteren Ausführungsbeispielen ist die Auswerteeinheit ausgebildet, einen Modus zur Auswertung der Amplitude des Abstandssignals in Abhängigkeit von einer Art des Untergrunds und/oder einer Vegetation des Untergrunds und/oder einer Voreinstellung zu aktivieren oder zu deaktivieren. Hierzu kann entsprechend Ausführungsbeispielen die Auswerteeinheit mit einer Mensch-Maschine-Schnittstelle verbunden sein, über welche die Art des Untergrunds und/oder die Vegetation des Untergrunds und/oder die Voreinstellung festlegbar ist.

Die Sendeleistung des (Ultraschall-)Sensors unter bestimmten Gegebenheiten zu verändern, d. h. zu reduzieren oder zu erhöhen, ist vorteilhaft. So kann bspw. die Sendeleistung des Sensors bei Untergründen mit wenig Bewuchs bzw. geringer Vegetationsdichte reduziert werden, da ein Abstand zum Boden recht gut detektiert werden kann. Bei einer hohen Vegetationsdichte kann es dagegen vorteilhaft sein die Sendeleistung des Sensors zu erhöhen, um mindestens ein (Echo)-Signal erfassen zu können, welches den Abstand zum Boden abbildet. Denn aufgrund der hohen Vegetationsdichte werden viele vom Sensor empfangene (Echo)-Signale von der Vegetation reflektiert, und nicht vom Boden.

Auch ist es unter bestimmten Gegebenheiten vorteilhaft, eine Empfängerempfindlichkeit des (Ultraschall-)Sensors zu verändern, d. h. zu reduzieren oder zu erhöhen. So kann bspw. die Empfängerempfindlichkeit des Sensors bei Untergründen mit wenig Bewuchs bzw. geringer Vegetationsdichte reduziert werden, da auch hier ein Abstand zum Boden recht gut detektiert werden kann. Bei einer hohen Vegetationsdichte kann es dagegen vorteilhaft sein die Empfängerempfindlichkeit des Sensors zu erhöhen, um mindestens ein (Echo)-Signal erfassen zu können, welches den Abstand zum Boden abbildet. Denn auch hier werden aufgrund der hohen Vegetationsdichte viele vom Sensor empfangene (Echo)-Signale von der Vegetation reflektiert, und nicht vom Boden.

Ein weiteres Ausführungsbeispiel schafft ein Messsystem, bei welchem ein GNSS-Sensor und/oder der Geschwindigkeitssensor mit umfasst ist, z. B. das Abstandsmesssystem kann weitere Komponenten wie beispielsweise einen GPS/GNSS-Empfänger oder eine Kommunikationseinheit (WLAN/Bluetooth/etc.) aufweisen, um beispielsweise eine Position der Maschine und des Anbaugeräts zu ermitteln oder Daten das Messsystem betreffend mit einer externen Einheit (Cloudserver etc.) auszutauschen.

Alternativ kann auch eine Schnittstelle zum Empfangen von Positionsinformationen oder Geschwindigkeitsinformationen vorgesehen sein. Ferner kann auch eine Schnittstelle vorgesehen sein, über welche die Auswerteeinheit Informationen von der Anlage erhält und/oder die Abstandswerte bzw. validierten Abstandswerte aussendet, z. B. um eine Steuerung der Höhenregelung bzw. Tiefenregelung durchzuführen.

Als Schnittstelle, über die die Auswerteeinheit ein ermitteltes Bodenabstandsmesssignal einer nachfolgenden Höhen- bzw. Tiefenregelung bereitstellt, kann entsprechend Ausführungsbeispielen beispielsweise ISOBUS verwendet werden, wie bei landwirtschaftlichen Anbaugeräten üblich. ISOBUS (ISO 11783) ist ein standardisiertes Kommunikationsprotokoll, das in Land- und Forstmaschinen verwendet wird. Das Protokoll basiert auf dem Controller Area Network (CAN-Bus). Denkbar sind bei der vorliegenden Erfindung jedoch auch andere Arten von Schnittstellen, beispielsweise eine analoge 4-20 mA Schnittstelle oder andere digitale Schnittstellen bzw. -protokolle wie J1939 oder ähnlich.

Ein weiteres Ausführungsbeispiel schafft ein Messsystem, das ferner mit einer Steuerung verbunden ist, die ausgebildet ist, ausgehend von dem validierten Abstandswert eine Höhe und/oder Tiefe eines landwirtschaftlichen Anbaugeräts der Landmaschine zu steuern und/oder konstant zu halten. Die Steuerung kann entsprechend weiteren Ausführungsbeispielen ausgebildet sein, ausgehend von einem validierten Abstandswert eine Querneigung zu steuern und/oder konstant zu halten.

Bezüglich den Abstandssensoren sei angemerkt, dass entsprechend einem Ausführungsbeispiel das Messsystem mehrere Abstandssensoren, insbesondere Abstandssensoren quer zur Fahrtrichtung angeordnet, aufweisen kann. Diese dienen bevorzugterweise der Querregelung. Das heißt also, um ein Anbaugerät parallel zum Boden zu halten, werden mehrere Abstandssensoren, beispielsweise zwei oder vier Sensoren, am Anbaugerät angeordnet, so kann das Anbaugerät sowohl in Fahrtrichtung als auch quer zur Fahrtrichtung in der Waage, d. h. parallel zum Boden gehalten werden.

Entsprechend weiteren Ausführungsbeispielen erhalten der bzw. die Abstandssensoren über die Schnittstelle (sofern diese als digitale Kommunikationsschnittstelle ausgeführt ist, beispielsweise ISOBUS) von einem auf dem Traktor angeordneten System eine Information, welche Art von Boden bzw. Störvegetation erwartet wird. Das heißt, der Bediener kann beispielsweise über die oben genannte Anzeige- und Bedieneinheit entsprechende Voreinstellungen zur Bodenart oder den zu bearbeitenden Boden vornehmen, wobei diese Daten dann über die Schnittstelle an den oder die Abstandssensoren kommuniziert werden können. Auf Basis dieser Daten/Einstellungen kann in der Auswerteeinheit des Sensors der Berechnungsalgorithmus angepasst, beispielsweise passende Parameter wie Abtastrate, Sendeleistung, Empfängerempfindlichkeit oder Filtereinstellungen gewählt oder die Amplituden der (Echo)-Signale mit in eine Berechnung des Bodenabstandswerts einbezogen werden. Die Anzeige- und Bedieneinheit kann hierfür bspw. vorgegebene Icons aufweisen, über die der Bediener wählen kann, ob bei dem zu bearbeitenden Boden eine "saubere" Stoppel oder ein erhöhtes Aufkommen von Störvegetation erwartet wird. Dieses Merkmal beschreibt kurz gesagt eine Reaktion bzw. eine Anpassung des BerechnungsAlgorithmus im Sensor auf Basis einer Bedienervorgabe.

Neben der Tiefenführung eines Anbaugeräts wie Grubber, Pflug, Sä- oder Drillmaschine ist mit der Kombination aus Messsystem und Steuerung eine Höhenführung eines Schneid- oder Mähwerks eines selbstfahrenden Mähdreschers oder Feldhäckslers entsprechend Ausführungsbeispielen möglich.

An dieser Stelle sei angemerkt, dass entsprechend Ausführungsbeispielen der Abstandssensor bzw. die Abstandssensoren in einer Anbringungshöhe, die mindestens einem Zweifachen der Wuchshöhe einer Vegetation des Untergrunds entspricht, angebracht sind. Hintergrund ist, dass Praxistests gezeigt haben, dass die Anbauhöhe des Sensors über dem Boden möglichst hoch gewählt werden muss, am besten deutlich mehr als das Doppelte der Wuchshöhe einer Störvegetation. Denn, beträgt die Höhe eines störenden Bewuchses in etwa die Hälfte der Anbauhöhe des Sensors, so könnten ggf. sogenannte Doppel- oder Mehrfach-Echosignale auftreten und eine Messung bzw. Signalauswertung bei der Auswahl des "richtigen" (Echo)-Signals erschweren.

Entsprechend weiteren Ausführungsbeispielen sei zur Anbringung angemerkt, dass vorzugsweise der Abstandssensor derart an dem Anbaugerät angeordnet sein kann, dass dieser den Abstand senkrecht zum Boden misst. Denkbar ist es jedoch auch, dass der Sensor schräg, beispielsweise in einem vorgegebenen Winkel von 30° oder 45° zur Bodenoberfläche, an dem Anbaugerät angeordnet ist.

Entsprechend Ausführungsbeispielen kann die Auswerteeinheit entweder im Sensor integriert sein oder als separates Gerät (separate Recheneinheit) ausgeführt sein. Vorteil einer in den Sensor integrierten Auswerteeinheit ist, dass das Abstandsmesssystem platzsparend angeordnet werden kann und dass der Benutzer, außer einer Kabelverbindung zum Traktor, keine weiteren Komponenten an das Anbaugerät anbauen muss. Vorteil einer separaten Auswerteeinheit (separates Gerät) ist, dass im Abstandssensor selbst keine anwendungsspezifischen Teile des Abstandsmesssystems vorhanden sind, beispielsweise ein speziell auf Agrar-Anwendungen angepasster Berechnungsalgorithmus. Im Falle eines Defekts des Sensors kann dieser einfach und kostengünstig ausgetauscht werden. Weiterhin können bei dieser Ausführung auch andere Sensortypen, unabhängig von der nachfolgenden Applikation, angebaut werden. Es wird hierdurch eine entsprechende Unabhängigkeit der einzelnen Komponenten erreicht.

Ein weiteres Ausführungsbeispiel schafft eine Landmaschine, insbesondere Landmaschine mit einem landwirtschaftlichen Anbaugerät, wie z. B. einem Grubber, einer Egge, einem Pflug, einer Bodenfräse, einer Sä- oder Drillmaschine, einem Schneid- oder Mähwerkzeug sowie einem entsprechenden Messsystem. Entsprechend einem Ausführungsbeispiel kann die Landmaschine eine Steuerung aufweisen, die ausgebildet ist, ausgehend von einem validierten Abstandswert eine Höhe und/oder Tiefe des landwirtschaftlichen Anbaugeräts der Landmaschine zu steuern und/oder konstant zu halten.

Ein Ausführungsbeispiel schafft ein Verfahren zur Durchführung einer Messung unter Verwendung eines entsprechenden Messsystems mit folgenden Schritten:
Auswerten des Abstandswerts, um einen validierten Abstandswert zu bestimmen, wobei nur derjenige Abstandswert oder diejenigen Abstandswerte bei der Bestimmung des validierten Abstandswerts berücksichtigt werden, die innerhalb eines vorbestimmten Fensters liegen.

Entsprechend weiteren Ausführungsbeispielen kann das Verfahren auf einem Computer ablaufen. Insofern wird entsprechend Ausführungsbeispielen ein Computerprogrammprodukt mit einem Programmcode zur Durchführung des Verfahrens geschaffen, wobei das Verfahren auf einem Computer oder einer Auswerteeinheit abläuft.

Ausführungsbeispiele der vorliegenden Erfindung werden nachfolgend anhand der beiliegenden Zeichnungen erläutert. Es zeigen:
- Fig. 1a: eine schematische Darstellung eines Messsystems gemäß einem Basisausführungsbeispiel;
- Fig. 1b: eine schematische Darstellung eines Messsystems gemäß einem erweiterten Ausführungsbeispiel;
- Fig. 2: ein schematisches Flussdiagramm eines Verfahrens zur Durchführung einer Messung gemäß Ausführungsbeispielen;
- Fig. 3a/b: eine schematische Darstellung einer Landmaschine mit einem Grubber als Anwendungsbeispiel für das Messsystem gemäß Ausführungsbeispielen;
- Fig. 4: eine schematische Darstellung einer Landmaschine mit einem Pflug als Anwendungsbeispiel für das Messsystem gemäß Ausführungsbeispielen;
- Fig. 5: eine schematische Darstellung eines Mähdreschers als weiteres Ausführungsbeispiel für das Messsystem gemäß Ausführungsbeispielen; und
- Fig. 6: ein schematisches Diagramm zur Darstellung der Abstandsmessungen bei einem Stoppelfeld zur Erläuterung von Ausführungsbeispielen.

Bevor nachfolgend Ausführungsbeispiele der vorliegenden Erfindung anhand der beiliegenden Zeichnungen erläutert werden, sei darauf hingewiesen, dass gleichwirkende Elemente und Strukturen mit gleichen Bezugszeichen versehen sind, so dass die Beschreibung derer aufeinander anwendbar bzw. austauschbar ist.

Wie oben bereits erläutert, beschäftigen sich Ausführungsbeispiele der vorliegenden Erfindung mit dem Problem, ein landwirtschaftliches Anbaugerät während den eingangs genannten Arbeiten (Grubbern, Pflügen, Säen, Ernten usw.) unter verschiedensten Bedingungen (Veränderungen im Bodenprofil, unterschiedliche Bodenbeschaffenheiten (beispielsweise trockener oder nasser Boden), heterogene Vegetation und Vegetationsdichte, Feldbewuchs usw.) stets in einer exakten Höhe bzw. Tiefe (beispielsweise 5, 10 oder 30 cm) zu führen oder zu halten, ohne dass der Fahrer des Zugfahrzeugs oder der Erntemaschine eingreifen muss. In der Praxis schwankt die Bearbeitungshöhe bzw. -tiefe oftmals aufgrund der oben genannten Bedingungen, was beispielsweise zu einer inhomogenen Bearbeitungsstruktur des Bodens oder aber zu einem entsprechenden Ernteverlust führt.

In Praxistests wurde festgestellt, dass sich für die eingangs genannten Arbeiten ein Abstandsmesssystem mit Ultraschallsensoren, so wie es die DE 10 2005 051 407 B4 beschreibt, durchaus eignet, jedoch beispielsweise bei einem Stoppelfeld mit dichtem Bodenbewuchs beziehungsweise starkem Unkrautbesatz nicht immer der Abstand zum Boden sicher erfasst wird. Denn, nachteilig bei der Vorrichtung zur Bodenabstandsmessung gemäß der DE 10 2005 051 407 B4 ist das in [0015] der Patentschrift selbst beschriebene Problem: Je mehr Messwerte in die Glättung einbezogen werden, umso genauer wird der Mittelwert, jedoch vermindert sich die Detailgenauigkeit und somit die Reaktionsgeschwindigkeit der Bodenabstandsmessung. Mit dem beschriebenen Messprinzip wird sich quasi durch eine Messwert-Iteration an den wirklichen Bodenabstand herangetastet, sodass das Messsystem insbesondere dann an seine Grenzen stößt, wenn hoher Bewuchs auf dem zu messenden Boden vorliegt. Eine Vergrößerung des Zielfensters oder eine Erhöhung der Stützwerte würde keine Verbesserung herbeiführen, sondern die Messgenauigkeit verschlechtern.

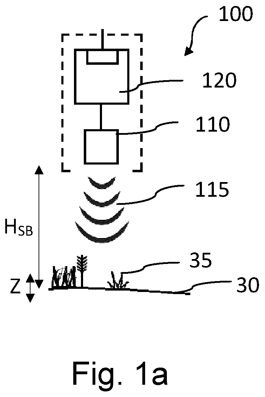

Um für ein Abstandsmesssystem eine angemessene Präzision der Messgenauigkeit bei hinreichender kurzer Reaktionszeit unter den oben genannten Bedingungen zu erreichen, bedarf es einer entsprechenden Verbesserung. Hier setzt die vorliegende Erfindung wie folgt an:
Ein Messsystem 100 umfassend zumindest einen Abstandssensor 110 sowie eine Auswerteeinheit 120, wie in Fig. 1a gezeigt. Der Abstandssensor 110 kann beispielsweise ein berührungsloser Abstandssensor, z. B. auf Ultraschallbasis, sein. Dieser sendet die Ultraschallsignale 115 in Richtung des zu bearbeiteten Bodens 30 aus, um den Abstand H_{SB} zwischen dem zu bearbeiteten Boden 30 und dem Abstandssensor 110 zu bestimmen. Die (Stör-)Vegetation 35 reflektiert das Ultraschallsignal 115 teilweise, sodass es zu Fehlmessungen kommen kann.

Die Abstandssensorsignale, ermittelt durch den Abstandssensor 110, sind Abstandswerten zugeordnet. Diese Abstandssensorsignale oder die ermittelten Abstandswerte werden an die Auswerteeinheit 120 übergeben, die dann eine Auswertung wie folgt vornimmt, um validierte Abstandswerte bzw. zumindest einen validierten Abstandswert zu erhalten. Die Auswerteeinheit 120 berücksichtigt nur diejenigen Abstandswerte bei der Bestimmung des validierten Abstandswerts, die innerhalb eines vorbestimmten Fensters Z liegen.

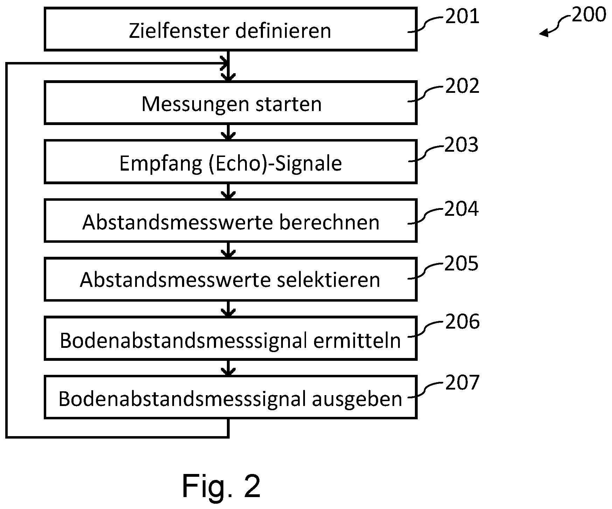

Dieses Fenster Z entspricht dem Erwartungswert mit einem positiven und/oder negativen Offset, in welchem die Höhe des Bodens 30 voraussichtlich schwankt. Dadurch, dass Z kleiner gewählt ist als die Höhe der Vegetation werden die Abstandswerte, die gegenüber der Vegetation gemessen sind, nicht berücksichtigt bzw. verworfen. Zum Fenster Z sei angemerkt, dass dieses durch einen Erwartungshorizont/-bereich für den Wert H_{SB} sowie einen positiven und negativen Offset definiert sein kann. Der Offset kann symmetrisch oder auch unsymmetrisch schwanken. Z wird entsprechend Ausführungsbeispielen in Abhängigkeit von der Bodenart, der Vegetationsart festgelegt (vgl. Schritt 201, in Fig. 2). Das kann beispielsweise durch den Fahrer erfolgen, d. h. also basierend auf einer Voreinstellung.

Während der Fahrt ermittelt der Sensor 110 eine Vielzahl von Abstandswerten entlang der Fahrtrichtung F, die dann unterschiedlichen Positionen zugeordnet sind. Die Positionen können beispielsweise unter Zuhilfenahme von GNSS-Sensorik bestimmt werden. Entsprechend Ausführungsbeispielen können auch mehrere Abstandswerte miteinander verrechnet werden, z. B. durch Mittelwertbildung oder gleitende Mittelwertbildung oder Mittelwertfilterung.

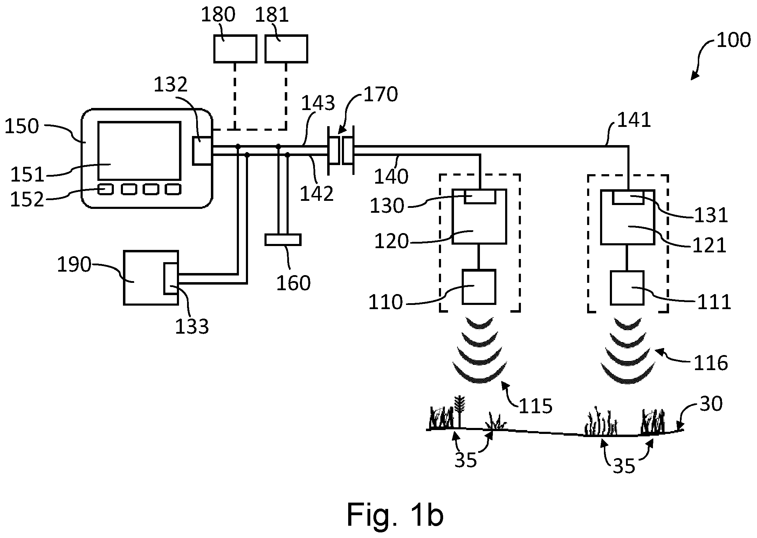

Nachfolgend wird ausgehend von diesem Basisprinzip ein erweitertes Ausführungsbeispiel mit optionalen Merkmalen erläutert. In Fig. 1b ist schematisch ein Abstandsmesssystem 100 dargestellt, mit einem Abstandssensor 110 und einer damit verbundenen Auswerteeinheit 120. Optional kann das Messsystem 100 noch einen weiteren Abstandssensor 111 mit einer dazugehörigen Auswerteeinheit 121 umfassen. Die Auswerteeinheiten 120 und 121 können dabei entweder separate Komponenten sein, oder mit den dazugehörigen Abstandssensoren 110 und 111 jeweils eine integrierte Einheit bilden.

Gemäß dem in Fig. 2 unter Bezugnahme auf Fig. 1b dargestellten Messverfahren 200 sendet jeder der beiden Sensoren 110 und 111 im Betrieb - wenn gemäß der vorliegenden Erfindung an einem landwirtschaftlichen Anbaugerät 40 angeordnet - ein eigenes Ultraschallsignal 115 bzw. 116 in Richtung eines zu bearbeitenden Bodens 30 aus (vgl. 202-207), um einen Abstand zu dem Boden 30 zu messen. Die ausgesendeten Signale 115,116 werden sowohl vom Boden 30 als auch von einer auf dem Boden vorhandenen (Stör-)Vegetation 35 reflektiert und von den Sensoren 110,111 wieder empfangen (vgl. 203). Aus allen empfangenen (Echo)- Signalen werden von den entsprechenden Auswerteeinheiten 120,121 Abstandswerte berechnet und ein jeweiliges Bodenabstandsmesssignal ermittelt (vgl. 206). Die ermittelten Bodenabstandsmesssignale werden über die entsprechende Schnittstelle 130 bzw. 131 und die Kabelverbindungen 140 bis 143 an beispielsweise eine Höhen- bzw. Tiefenregelung 190 für das Anbaugerät 40 ausgegeben (vgl. 207).

Wie in Fig. 1b weiter dargestellt, so umfasst das Abstandsmesssystem 100 noch eine Anzeige- und Bedieneinheit 150, welche vorzugsweise in der Fahrerkabine eines Zugfahrzeugs 10 wie beispielsweise einem Traktor oder einer selbstfahrenden Erntemaschine (in Fig. 1a nicht dargestellt), angeordnet ist. Die Anzeige- und Bedieneinheit 150 umfasst eine Schnittstelle 132 zum Senden und Empfangen von Daten, wie beispielsweise die oben beschriebenen Bodenabstandsmesssignale, sowie ein Display 151 und Tastenfelder 152 zur Darstellung und Eingabe bzw. Veränderung von Daten, Parametern, Werten usw. Beispielsweise können auf dem Display 151 die oben beschriebenen Bodenabstandsmesssignale visuell dargestellt werden, Sollwerte und Parameter für die Höhen- bzw. Tiefenregelung 190 eingestellt und verändert werden oder aber eine Anpassung des BerechnungsAlgorithmus in den Sensoren 110,111 vorgenommen werden. Die entsprechenden Einstellungen werden über die Schnittstellen 130 bis 133, welche vorzugsweise digitale Schnittstellen wie beispielsweise ISOBUS sind, von einer Komponente zur anderen übertragen.

Das Abstandsmesssystem 100 kann weiterhin noch einen GNSS/GPS-Empfänger 180 sowie eine Kommunikationseinheit 181 umfassen, welche beispielsweise mit der Anzeige- und Bedieneinheit 150 elektrisch verbunden sind. Mithilfe des GNSS/GPS-Empfängers 180 kann beispielsweise die Position sowie eine Geschwindigkeit der Maschine ermittelt werden. Über die Kommunikationseinheit 181, beispielsweise WLAN oder Bluetooth, können Daten, Parameter oder sonstige Werte mit einem nicht dargestellten Cloud-Server oder einem ebenfalls nicht dargestellten mobilen Endgerät ausgetauscht werden. Beispielsweise können Wetter- oder Bodendaten in das System eingespielt werden und so Einstellungen und Parameter in den Auswerteeinheiten 120 und 121 oder der Höhen- und Tiefenregelung 190 entsprechend verändert werden.

Bezugszeichen 160 zeigt eine Signalsteckdose am Zugfahrzeug 10, über welche beispielsweise Impulse ausgegeben werden, aus denen dann die Geschwindigkeit errechnet werden kann. Ferner zeigt Bezugszeichen 170 eine Steckverbindung, über welche diejenigen Teile des Abstandsmesssystems 100 zugehörig zum Anbaugerät 40 (Sensoren und Auswerteeinheiten) einfach und schnell von dem restlichen Teil an der Maschine 10 elektrisch getrennt werden können. Hierdurch können beispielsweise an der Zugmaschine 10 verschiedene Anbaugeräte 40 verwendet bzw. eingesetzt werden.

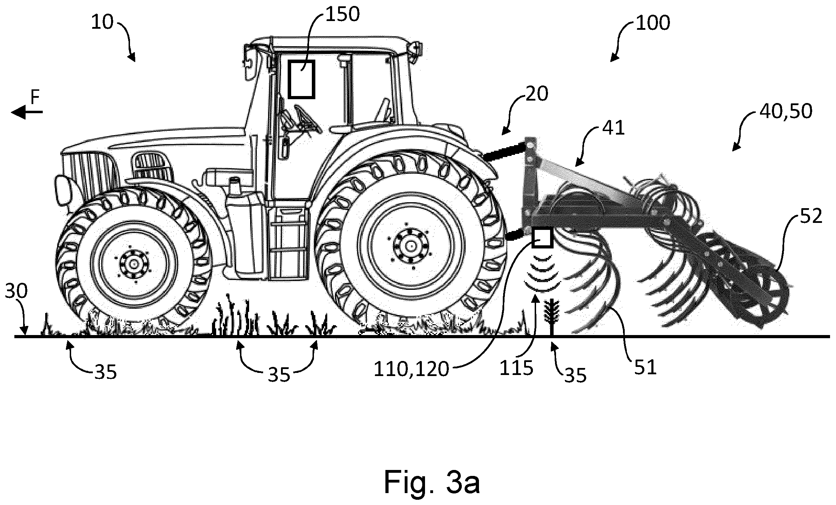

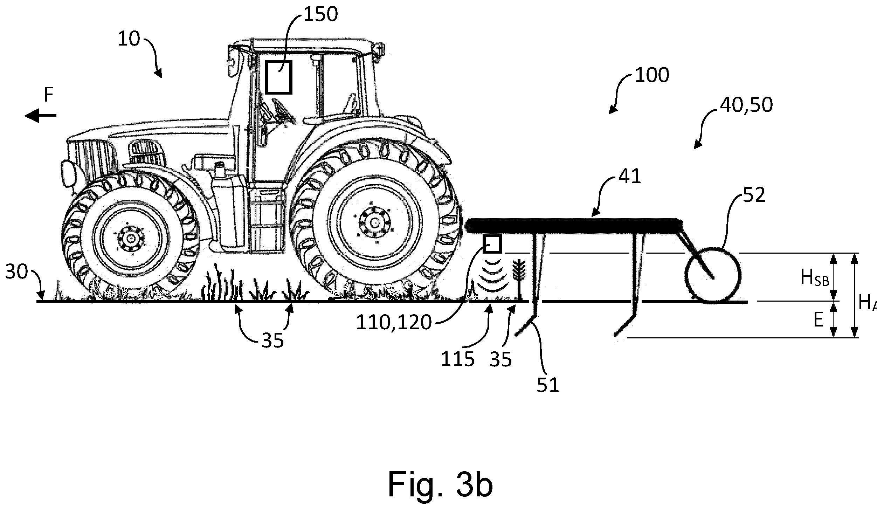

Es sei angemerkt, dass sich die folgenden Fig. 3a/3b bis 6 und deren Beschreibungen bevorzugt auf ein Abstandsmesssystem 100 mit nur einem Abstandssensor 110 und einer Auswerteinheit 120 beziehen. Weitere Abstandssensoren sowie weitere Auswerteeinheiten werden insbesondere dann verwendet, wenn das Anbaugerät 40 parallel zum Boden gehalten werden soll, das heißt in und/oder quer zur Fahrtrichtung F in der Waage gehalten werden soll.

Fig. 3a und 3b zeigen schematisch einen Traktor 10 als Zugfahrzeug mit einem Grubber 50 als Anbaugerät 40. Der Grubber 50 weist einen Rahmen 41 auf, welcher über ein Dreipunktgestänge 20 mechanisch und hydraulisch mit dem Traktor 10 verbunden ist. An dem Rahmen 41 des Grubbers 50 sind zur Bodenbearbeitung Federzinken 51 sowie eine Krümelwalze 52 angeordnet. Die Federzinken 51 greifen bei der Bodenbearbeitung zur Auflockerung oder zum Umbrechen des zu bearbeitenden Bodens 30 in diesen ein. Über das Dreipunktgestänge 20 kann der Grubber 50 in seiner Höhenlage verändert werden, d. h. angehoben oder abgesenkt werden. Eine Veränderung der Höhenlage bewirkt somit eine Veränderung einer Eingriffstiefe E der Federzinken 51 in den zu bearbeitenden Boden 30.

Um eine gleichmäßige Bodenbearbeitung durchführen zu können, ist an dem Grubber 50 und dem Traktor 10 ein wie in den Fig. 1 und 2 beschriebenes Abstandsmesssystem 100 angeordnet. Der Sensor 110 ist dabei in einer Anbauhöhe H_{A} am Rahmen 41 des Grubbers 50 angeordnet und misst mittels Ultraschall 115 einen Abstand H_{SB} zum zu bearbeitenden Boden 30. Die Eingriffstiefe E der Federzinken 51 in den zu bearbeitenden Boden 30 ergibt sich somit aus der Differenz zwischen der Anbauhöhe H_{A} und dem Abstand H_{SB}. Der Traktor 10 und der Grubber 50 bewegen sich während der Bodenbearbeitung über den zu bearbeitenden Boden 30, auf dem sich verschiedene (Stör-)Vegetation 35 befindet, beispielsweise Stoppeln, Unkraut oder sonstiger Bewuchs. Das Abstandsmesssystem 100 ermittelt während der Bodenbearbeitung kontinuierlich ein Bodenabstandsmesssignal und führt dies der nachfolgenden Tiefenregelung 190 zu, welche den Grubber 50 während der Arbeiten trotz vorhandener (Stör-)Vegetation 35 in einer vorgegebenen Eingriffstiefe E hält bzw. führt.

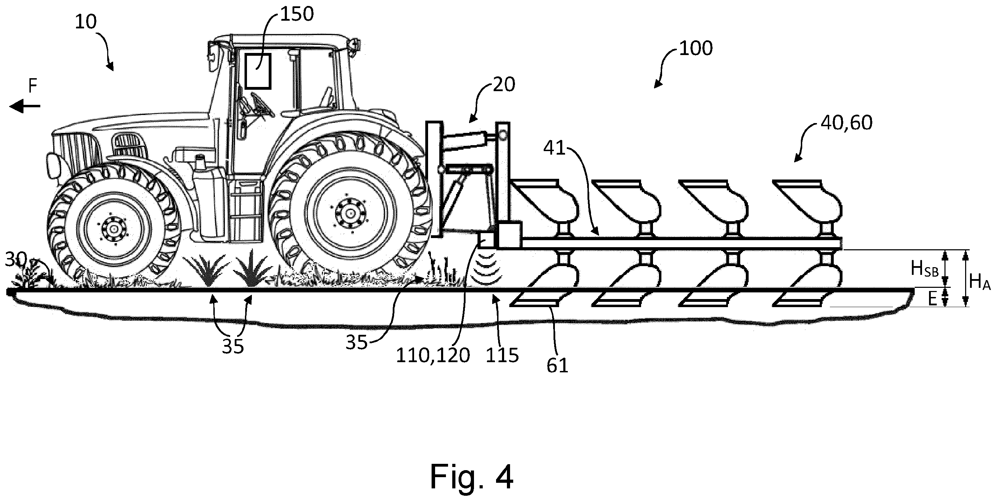

Fig. 4 zeigt schematisch einen Traktor 10 als Zugfahrzeug mit einem Pflug 60 als Anbaugerät 40. Der Pflug 60 weist einen Rahmen 41 auf, welcher über ein Dreipunktgestänge 20 mechanisch und hydraulisch mit dem Traktor 10 verbunden ist. An dem Rahmen 41 des Pflugs 60 sind zur Bodenbearbeitung Pflugscharen 61 angeordnet. Die Pflugscharen 61 greifen bei der Bodenbearbeitung zum Umbrechen des zu bearbeitenden Bodens 30 in diesen ein. Über das Dreipunktgestänge 20 kann der Pflug 60 in seiner Höhenlage verändert werden, d. h. angehoben oder abgesenkt werden. Eine Veränderung der Höhenlage bewirkt somit eine Veränderung einer Eingriffstiefe E der Pflugscharen 61 in den zu bearbeitenden Boden 30.

Um eine gleichmäßige Bodenbearbeitung durchführen zu können, ist an dem Pflug 60 und dem Traktor 10 ein wie in den Fig. 1 und 2 beschriebenes Abstandsmesssystem 100 angeordnet. Der Sensor 110 ist dabei in einer Anbauhöhe H_{A} am Rahmen 41 des Pflugs 60 angeordnet und misst mittels Ultraschall 115 einen Abstand H_{SB} zum zu bearbeitenden Boden 30. Die Eingriffstiefe E der Pflugscharen 61 in den zu bearbeitenden Boden 30 ergibt sich somit aus der Differenz zwischen der Anbauhöhe H_{A} und dem Abstand H_{SB}. Der Traktor 10 und der Pflug 60 bewegen sich während der Bodenbearbeitung über den zu bearbeitenden Boden 30, auf dem sich verschiedene (Stör-)Vegetation 35 befindet, beispielsweise Stoppeln, Unkraut oder sonstiger Bewuchs. Das Abstandsmesssystem 100 ermittelt während der Bodenbearbeitung kontinuierlich ein Bodenabstandsmesssignal und führt dies der nachfolgenden Tiefenregelung 190 zu, welche den Pflug 60 während der Arbeiten trotz vorhandener (Stör-)Vegetation 35 in einer vorgegebenen Eingriffstiefe E hält bzw. führt.

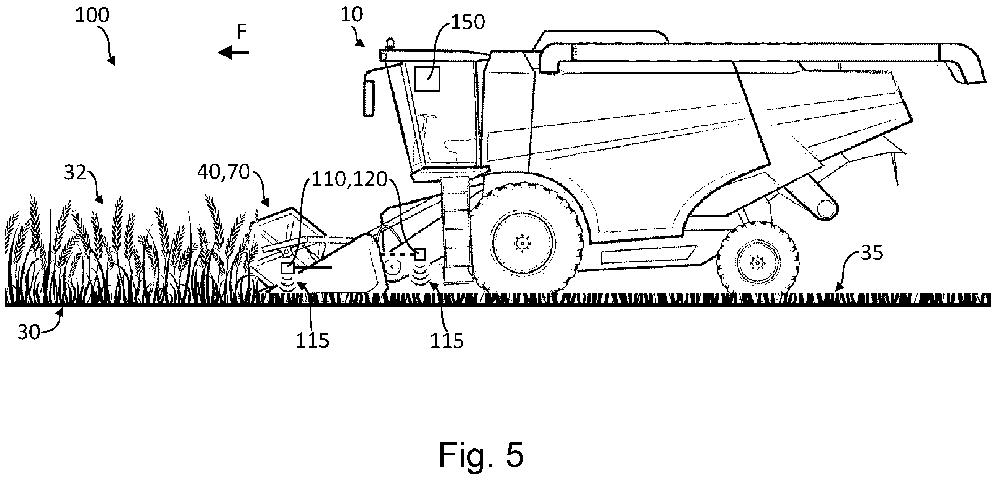

Fig. 5 zeigt schematisch einen selbstfahrenden Mähdrescher 10 mit einem Erntevorsatz 70 als Anbaugerät 40. Mithilfe des Erntevorsatzes 70 kann der Mähdrescher 10 beispielsweise ein Getreidefeld 32 abernten. Auf dem abgeernteten Boden 30 verbleiben dann die noch stehenden Getreidestoppeln 35.

Der Erntevorsatz 70 ist mechanisch und hydraulisch mit dem Mähdrescher 10 verbunden und kann in seiner Höhenlage verändert, d. h. angehoben oder abgesenkt werden. Eine Veränderung der Höhenlage des Erntevorsatzes 70 bewirkt somit eine Veränderung der verbleibenden Stoppelhöhe über dem zu bearbeitenden Boden 30.

Um ein gleichmäßiges Abernten des Getreides 32 durchführen zu können, ist an dem Erntevorsatz 70 ein wie in den Fig. 1 und 2 beschriebenes Abstandsmesssystem 100 angeordnet. Der Sensor 110 ist dabei in einer Anbauhöhe H_{A} am Erntevorsatz 70 angeordnet und misst mittels Ultraschall 115 einen Abstand H_{SB} zum bereits abgeernteten Boden 30. Die einzustellende Höhe des Erntevorsatzes 70 über dem zu bearbeitenden bzw. abgeernteten Boden 30 ergibt sich somit aus der Differenz zwischen dem Abstand H_{SB} und der Anbauhöhe H_{A}. Der Mähdrescher 10 und der Erntevorsatz 70 bewegen sich während der Bodenbearbeitung (Ernte) über den zu bearbeitenden Boden 30, auf dem nach dem Abernten des Getreides 32 überwiegend Stoppeln 35 sowie ggf. weitere (Stör-)Vegetation wie Unkraut oder sonstiger Bewuchs verbleiben. Das Abstandsmesssystem 100 ermittelt während des Erntevorgangs kontinuierlich ein Bodenabstandsmesssignal und führt dies der nachfolgenden Höhenregelung 190 zu, welche den Erntevorsatz 70 während der Arbeiten trotz vorhandener (Stör-)Vegetation 35 (Stoppeln) in einer vorgegebenen Höhe hält bzw. führt. Denkbar ist in diesem Zusammenhang auch die Regelung einer Querneigung, insbesondere bei sehr breiten Erntevorsätzen 70.

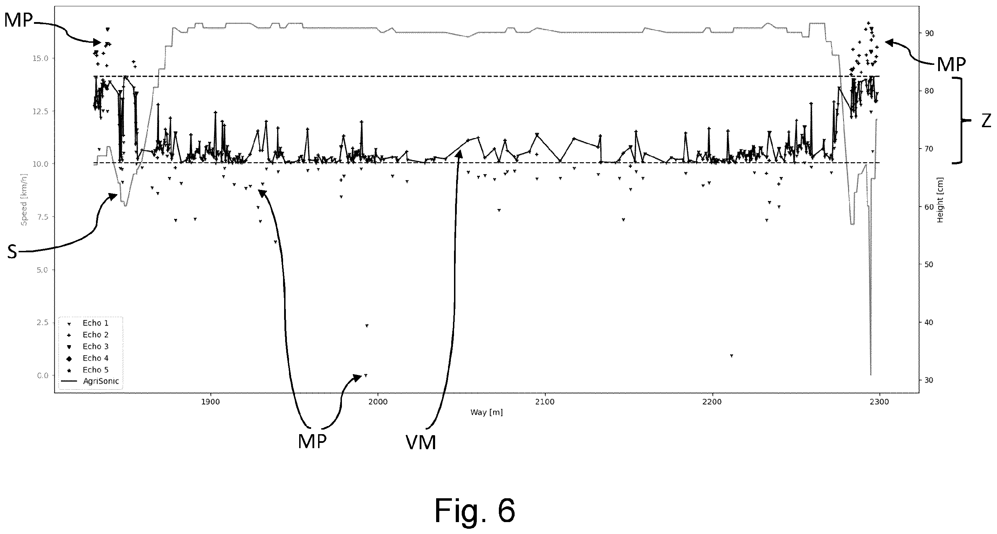

Fig. 6 zeigt den grafischen Verlauf von Abstandsmessungen an einem Grubber 50, mit welchem ein Boden 30 (Stoppelfeld) über eine Distanz von ca. 480 m bearbeitet wurde. Die Anbauhöhe H_{A} des Sensors 110 beträgt 75 cm. Der Bereich zwischen den gestrichelten Linien stellt das definierte Zielfenster Z im Bereich von 68 cm bis 82 cm dar (Anbauhöhe H_{A} +/- 7 cm Offset). Die durchgezogene Linie S stellt die Fahrgeschwindigkeit des Traktors und des Anbaugeräts dar. Die mit MP bezeichneten Punkte stellen Messpunkte des Bodens 30 sowie der Vegetation 35 dar, wobei die Messpunkte MP je nach reflektiertem (Echo)-Signal mit unterschiedlichen Symbolen dargestellt sind. Die Messungen wurden in der Auswerteeinheit 120 mit der oben beschriebenen ersten Variante der Signalauswertung ausgewertet. Diejenigen Messwerte, die aus allen empfangenen (Echo)-Signalen in dem vordefinierten Zielfenster Z "am weitesten oben" liegen, d. h. den höchsten bzw. größten Abstandswert aufweisen, wurden mit einer Linie verbunden ( Linie VM). Hier ist davon auszugehen, dass diese (Echo)-Signale vom Boden 30 reflektiert wurden und nicht von der Vegetation 35 (Halme, Pflanzen, Unkraut, Stoppeln etc.).

Bei oben erläuterten Ausführungsbeispielen wurde davon ausgegangen, dass jeder Abstandssensor ein oder mehrere Abstandssignale bestimmt. Hintergrund hierfür ist, dass an ein und derselben Position der Sensor ein Signal aussendet und beispielsweise mehrere Echosignale zurückkommen können. Diese mehreren Echosignale können von ein oder mehreren Punkten am Untergrund sein, sodass so also auch mehrere Abstandssignale mit unterschiedlichen Abstandswerten erhalten werden. Die Auswerteeinheit wählt dann den oder auch die (wenn es mehrere sind) Abstandswerte aus, die innerhalb des vorbestimmten Fensters Z liegen, um einen validierten Abstandswert zu erhalten. Wenn es mehrere sind, können natürlich auch mehrere validierte Abstandswerte, die in dem Fenster Z liegen, erhalten werden. Gemäß Ausführungsbeispielen kann auch eine Mittelung zwischen den mehreren Abstandswerte erfolgen kann. Umgekehrt heißt es, dass dann die Abstandswerte zugehörig zu den ein oder mehreren Abstandssignalen, die außerhalb des Fensters liegen, nicht als validiert Abstandswert übernommen werden.

Entsprechend einer weiteren Betrachtung können auch mehrere Abstandssignale dann vorliegen, wenn der Abstandssensor zu zwei unterschiedlichen Zeitpunkten, d. h. beispielsweise an zwei unterschiedlichen Positionen, gegenüber dem Untergrund misst. Je nach Punkt auf dem Untergrund wird dann ein unterschiedlicher Abstandswert erhalten. Beispielsweise kann ein erster Abstandswert gegenüber dem Untergrund selbst gemessen werden, während ein zweiter Abstandswert beispielsweise gegenüber einem Gras oder einem weiteren Gegenstand außerhalb des vorbestimmten Fensters gemessen wird. Dieser zweite Wert wird dann nicht als der validierte Abstandswert übernommen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eine Hardware-Apparats), wie zum Beispiel einen Mikroprozessor, einen programmierbaren Computer oder eine elektronische Schaltung. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 10: Maschine, Zugmaschine, Traktor, selbstfahrende Erntemaschine
- 20: Dreipunktgestänge
- 30: Zu bearbeitender Boden
- 32: Getreidefeld
- 35: (Stör)vegetation
- 40: Anbaugerät
- 41: Rahmen des Anbaugeräts
- 50: Grubber
- 51: Federzinken mit Schar
- 52: Krümelwalze
- 60: Pflug
- 61: Pflugschar
- 70: Erntevorsatz Mähdrescher
- 100: Abstandsmesssystem
- 110,111: Abstandssensor
- 115,116: Ausgesendete Ultraschallwellen
- 120,121: Auswerteeinheit
- 130-133: Schnittstelle
- 140-143: Kabelverbindung
- 150: Anzeige- und Bedieneinheit
- 151: Anzeige (Display)
- 152: Bedienelemente
- 160: Signalsteckdose
- 170: Steckverbindung zwischen Maschine und Anbaugerät
- 180: Sensor/Empfänger (GNSS/GPS, ...)
- 181: Kommunikationseinheit (WLAN, Bluetooth, ...)
- 190: Höhen- bzw. Tiefenregelung
- 200: Messverfahren
- 201-207: Schritte im Messverfahren
- E: Eingriffstiefe

- F: Fahrtrichtung
- Z: Fenster / Erwartungsbereich
- S: Fahrgeschwindigkeit
- MP: Messpunkte
- VM: Messpunktlinie
- H_{A}: Anbauhöhe
- H_{SB}: Abstand (Höhe) zwischen Sensor und Boden

## Patentansprüche

1. Messsystem (110) für eine Landmaschine (10) oder für ein landwirtschaftliches Anbaugerät (40, 50, 60) einer Landmaschine (10), mit folgenden Merkmalen:
zumindest einem Abstandssensor (110, 111), der ausgebildet ist, einen Abstand zu einem Untergrund (30) berührungslos zu erfassen und in Abhängigkeit von dem Abstand ein oder mehrere Abstandssignale, jeweils anzeigend einen Abstandswert auszugeben;
sowie eine Auswerteeinheit (120, 121), die ausgebildet ist, den oder die Abstandswerte auszuwerten, um einen validierten Abstandswert zu bestimmen,
wobei die Auswerteeinheit (120, 121) nur denjenigen oder diejenigen Abstandswerte bei der Bestimmung des validierten Abstandswerts berücksichtigt, die innerhalb eines vorbestimmten Fensters (Z) liegen.

2. Messsystem (110) gemäß Anspruch 1, wobei das vorbestimmte Fenster (Z) durch einen Offset oder einen Offset mit einem Erwartungswert für den Abstandswert definiert ist.

3. Messsystem (110) gemäß Anspruch 2, wobei der Offset einen positiven und/oder einen negativen Offsetanteil aufweist; und/oder
wobei der Offset unsymmetrisch ist.

4. Messsystem (110) gemäß einem der vorherigen Ansprüche, wobei das vorbestimmte Fenster (Z) (und/oder damit der Offset) in Abhängigkeit von einer Voreinstellung und/oder einer Bodenart des Untergrunds (30) und/oder einer Vegetation des Untergrunds (30) definiert ist; und/oder
wobei das vorbestimmte Fenster (Z) eine Breite aufweist, die einem Bereich zwischen 1 % und 10 % oder zwischen 1 % und 20 % oder zwischen 1 % und 30 % oder zwischen 5 % und 30 % der Anbauhöhe des Abstandssensors (110, 111) entspricht.

5. Messsystem (110) gemäß einem der Ansprüche 2 bis 4, wobei der Erwartungswert durch einen initialen Referenzwert und/oder eine Anbauhöhe und/oder eine Referenzmessung festgelegt ist.

6. Messsystem (110) gemäß Anspruch 5, wobei der Erwartungswert durch den initialen Referenzwert und/oder die Anbauhöhe und/oder die Referenzmessung abzüglich einer Eingriffstiefe des landwirtschaftlichen Anbaugeräts (40, 50, 60) oder einer bestimmten Eingriffstiefe für das landwirtschaftlichen Anbaugerät (40, 50, 60) festgelegt ist.

7. Messsystem (110) gemäß einem der vorherigen Ansprüche, wobei die Auswerteeinheit (120, 121) ausgebildet ist, Abstandswerte außerhalb des vorbestimmten Fensters (Z) zu verwerfen; und/oder
wobei die Auswerteeinheit ausgebildet ist, Abstandswerte außerhalb des vorbestimmten Fensters zu verwerfen und stattdessen Abstandswerte zu verwenden, die innerhalb des Fensters liegen oder die eine minimale Differenz zu einem zuvor ermittelten Abstandswert aufweisen; und/oder
wobei die Auswerteeinheit (120, 121) ausgebildet ist, den validierten Abstandswert ausgehend von einem vorher bestimmten validierten Abstandswert zu bestimmen, wenn alle Abstandswerte außerhalb des vorbestimmten Fensters (Z) liegen.

8. Messsystem (110) gemäß einem der vorherigen Ansprüche, wobei der Abstandssensor (110, 111) einen Ultraschallsensor umfasst und/oder ausgebildet ist, Echo-signale, welche durch ein ausgesendetes Messsignal von dem Untergrund (30) und/oder einer Vegetation des Untergrunds (30) reflektiert werden, zu empfangen.

9. Messsystem (110) gemäß einem der vorherigen Ansprüche, wobei der Abstandssensor (110, 111) ausgebildet ist, eine Referenzmessung zur Kompensation von Temperatureinflüssen, Luftdruckeinflüssen, Luftfeuchtigkeitseinflüssen und/oder zur Kalibrierung durchzuführen.

10. Messsystem (110) gemäß einem der vorherigen Ansprüche, wobei die Auswerteeinheit (120, 121) ausgebildet ist, eine Abtastrate und/oder Messperiode des Abstandssensors (110, 111) in Abhängigkeit von einer Art des Untergrunds (30) und/oder einer Vegetation des Untergrunds (30) und/oder einer Voreinstellung und/oder einer Fahrgeschwindigkeit der Landmaschine (10) zu variieren; und/oder
wobei die Auswerteeinheit (120, 121) ausgebildet ist, eine Filtereinstellung in Abhängigkeit einer Art des Untergrunds (30) und/oder einer Vegetation des Untergrunds (30) und/oder einer Voreinstellung und/oder einer Fahrgeschwindigkeit der Landmaschine (10) anzupassen; und/oder
wobei die Auswerteeinheit (120, 121) ausgebildet ist, Sende- oder Empfangsparameter des Abstandssensors (110, 111) in Abhängigkeit einer Art des Untergrunds (30) und/oder einer Vegetation des Untergrunds (30) und/oder einer Voreinstellung anzupassen; und/oder
wobei die Auswerteeinheit (120, 121) ausgebildet ist, einen Modus zur Auswertung der Amplitude des Abstandssignals in Abhängigkeit einer Art des Untergrunds (30) und/oder einer Vegetation des Untergrunds (30) und/oder einer Voreinstellung zu aktivieren oder deaktivieren.

11. Messsystem (110) gemäß Anspruch 10, wobei die Auswerteeinheit (120, 121) mit einer Mensch-Maschine-Schnittstelle (152) verbunden ist, über welche die Art des Untergrunds (30) und/oder die Vegetation des Untergrunds (30) und/oder die Voreinstellung festlegbar ist.

12. Messsystem (110) gemäß einem der vorherigen Ansprüche, wobei die Auswerteeinheit (120, 121) ausgebildet ist, über mehrere Abstandssignale und Abstandswerte zugeordnet zu unterschiedlichen Positionen und/oder unterschiedlichen Zeitpunkten eine Mittelwertfilterung durchzuführen und/oder einen gleitenden Mittelwert zu berechnen; oder
wobei die Auswerteeinheit (120, 121) ausgebildet ist, über mehrere Abstandswerte innerhalb des Fensters (Z) zugeordnet zu unterschiedlichen Positionen und/oder unterschiedlichen Zeitpunkten eine Mittelwertfilterung durchzuführen und/oder einen gleitenden Mittelwert zu berechnen; und/oder
wobei die Auswerteeinheit (120, 121) ausgebildet ist, mehrere Messungen an mehreren, in Fahrtrichtung (F) aufeinanderfolgenden Positionen und/oder Zeitpunkten durchzuführen.

13. Messsystem (110) gemäß einem der vorherigen Ansprüche, das ferner einen GNSS-Sensor und/oder einen Geschwindigkeitssensor und/oder eine Schnittstelle zum Empfangen einer Positionsinformation oder Geschwindigkeitsinformation aufweist.

14. Messsystem (110) gemäß einem der vorherigen Ansprüche, das ferner mit einer Steuerung verbunden ist, die ausgebildet ist, ausgehend von dem validierten Abstandswert eine Höhe und/oder Tiefe eines landwirtschaftlichen Anbaugeräts (40, 50, 60) der Landmaschine (10) zu steuern und/oder konstant zu halten; und/oder
das ferner mit einer Steuerung verbunden ist, die ausgebildet ist, ausgehend von einem validierten Abstandswert eine Querneigung zu steuern und/oder konstant zu halten.

15. Messsystem (110) gemäß einem der vorherigen Ansprüche, das ferner mehrere Abstandssensoren (110, 111), insbesondere Abstandssensoren (110, 111) quer zur Fahrtrichtung (F) angeordnet, aufweist.

16. Messsystem (110) gemäß einem der vorherigen Ansprüche, wobei der Abstandssensor (110, 111) in einer Anbringungshöhe, die mindestens dem Zweifachen der Wuchshöhe einer Vegetation des Untergrunds (30) entspricht, angebracht ist.

17. Landmaschine (10), insbesondere Landmaschine (10) mit einem landwirtschaftlichen Anbaugerät (40, 50, 60), wie z. B. einem Grubber, einer Egge, einem Pflug, einer Bodenfräse, einer Sä- oder Drillmaschine, einem Schneid- oder Mähwerk, umfassend einem Messsystem (110) gemäß einem der vorherigen Ansprüche.

18. Landmaschine (10) gemäß Anspruch 17, wobei die Landmaschine (10) ferner eine Steuerung aufweist, die ausgebildet ist, ausgehend von einem validierten Abstandswert eine Höhe und/oder Tiefe des landwirtschaftlichen Anbaugeräts (40, 50, 60) der Landmaschine (10) zu steuern und/oder konstant zu halten.

19. Verfahren zur Durchführung einer Messung unter Verwendung eines Messsystems (110) für eine Landmaschine (10) oder ein landwirtschaftliches Anbaugerät (40, 50, 60), wobei das Messsystem (110) zumindest ein Abstandssensor (110, 111) umfasst, der ausgebildet ist, einen Abstand zu einem Untergrund (30) berührungslos zu erfassen und in Abhängigkeit von dem Abstand ein oder mehrere Abstandssignale, jeweils anzeigend einen Abstandswert auszugeben; mit folgenden Schritten:
Auswerten des oder der Abstandswerte, um einen validierten Abstandswert zu bestimmen, wobei nur derjenige oder diejenigen Abstandswerte bei der Bestimmung des validierten Abstandswerts berücksichtigt werden, die innerhalb eines vorbestimmten Fensters (Z) liegen.

20. Computerprogramm mit einem Programmcode zur Durchführung eines Verfahrens nach Anspruch 19, wobei das Verfahren auf einem Computer abläuft.
